# EUROPÄISCHE PATENTSCHRIFT

(11) **EP 2 607 739 B1**
(45) Veröffentlichungstag und Bekanntmachung des Hinweises auf die Patenterteilung: **15.01.2020**
(21) Anmeldenummer: 12007542.9
(22) Anmeldetag: 06.11.2012
(51) Int. Cl.: F16F 1/38, F16F 1/387, F16F 13/14

(54) **Elastisches Gelenk insbesondere für eine Radaufhängung eines Kraftfahrzeugs**
Elastic joint, particularly for a wheel suspension of a motor vehicle
Articulation élastique en particulier pour une suspension de roue d'un véhicule automobile

(30) Priorität: 21.12.2011 DE 102011121831
(43) Veröffentlichungstag der Anmeldung: 26.06.2013
(73) Patentinhaber: Anvis Deutschland GmbH, 36396 Steinau an der Strasse (DE)
(72) Erfinder: Kondor, Jozsef, 36396 Steinau an der Strasse (DE); Hermann, Waldemar, 63637 Jossgrund (DE); Khlistunov, Dimitry, 63628 Bad Soden-Salmünster (DE); Mysin, Alexej, 63628 Bad Soden-Salmünster (DE)
(74) Vertreter: Schmid, Nils T.F.

(56) Entgegenhaltungen:
- EP-A1- 0 147 662
- GB-A- 2 351 139
- JP-A- 2006 307 981
- US-A1- 2008 054 539

## Beschreibung

Die Erfindung betrifft ein elastisches Gelenk, insbesondere für eine Radaufhängung eines Kraftfahrzeugs, insbesondere für eine Hinterradachsaufhängung des Kraftfahrzeugs.

In der modernen Kraftfahrzeugtechnik ist bekannt, insbesondere bei der Hinterradachsaufhängung eines Pkws sowie auch Lastkraftwagens, sogenannte elastische Lager oder elastische Gelenke zu realisieren, deren grundsätzlicher Aufbau durch eine starre, insbesondere aus Metall gefertigte Innenarmatur, wie einer Innenhülse oder einem Trägerstab, einer Außenarmatur, wie einer Außenhülse und einem zwischen den Armaturen liegenden Elastomerkörper, gebildet ist. Der Elastomerkörper dient dazu, die Fahrzeugkarosserie von den schwingungsbelasteten Rädern schwingungstechnisch zu trennen, insbesondere akustisch zu isolieren. Auch die sehr hohen, auftretenden dynamischen Fahrzeuglasten sind in den elastischen Gelenken zu ertragen. Es gibt eine Vielzahl von Ausführungen von elastischen Gelenken, deren Elastomerkörper üblicherweise durch ein rein elastisches Material gebildet ist, wobei auch hydraulische Funktionskomponenten hinzugefügt sein können.

EP 0 147 662, die als naheliegendster Stand der Technik betrachtet wird, offenbart ein elastisches Lager mit Zwangsführung. Aus US 2008/0054539 geht eine modulare Lagerbuchse für eine Achse hervor. JP 2006/307981 betrifft eine elastische Lagerbuchse. GB 2351139 offenbart eine Montagevorrichtung zum hydraulischen Dämpfen von axialen oder radialen Vibrationen.

Das Hauptaugenmerk dieser Erfindung wird insbesondere auf die elastischen Gelenke mit einem reinen Elastomermaterialfederkörper zwischen den starren Armaturen gerichtet.

Aus EP 1 505 311 A1 ist eine Lagerbuchse für ein Kraftfahrzeug bekannt, das eine hülsenförmige, starre Innenarmatur sowie eine hülsenförmig, schwächer ausgebildete Außenhülse gebildet ist, zwischen denen ein Elastomerkörper eingespritzt ist. Zur Einstellung der Federcharakteristik des Elastomerkörpers ist die Außenhülse mit einer Einschnürung versehen, wodurch zwei in Radialrichtung unterschiedlich starke Elastomerkörperabschnitte gebildet sind, deren Verformungen sich gegenseitig beeinflussen. Um die Steifigkeit der Lagerbuchse in einer Radialrichtung zu verringern, so dass die Lagerbuchse in einer Radialrichtung weich und in der anderen steifer ausgeführt ist, ist in dem Elastomerkörper eine Ausnehmung teilumfangsgemäß realisiert. In der steiferen Radialrichtung sind zwei durch die Ausnehmung voneinander separierte Radialstege realisiert, die über ein umlaufendes Elastomerringteil miteinander verbunden sind.

Ein elastisch nachgiebiges Schwenklager zur gegenseitigen schwenkbaren Verbindung eines Radträgers mit einem Führungsglied ist aus DE 32 05 716 C2 bekannt. Der zwischen den Armaturen einvulkanisierte Elastomerkörper ist mittels einer mittigen Aufwölbung in zwei in Radialrichtung unterschiedlich starke Ringabschnitte aufteilbar. Eine dazu ähnliche Ausführung eines elastischen Gelenks ist aus KR 2009 009 8978 A bekannt, bei der die abschnittsweise Aufteilung des Elastomerkörpers durch eine Einschürung in der Außenarmatur realisiert ist.

Es zeigte sich bei den bekannten elastischen Gelenken insbesondere für Kraftfahrzeuge, dass eine für Kraftfahrzeugingenieure wichtige Kenngröße, nämlich das Steifigkeitsverhältnis von Axialsteifigkeit zur Radialstreifigkeit nicht ausreichend hoch realisiert werden kann. Verhältnisgrößen von knapp über 1,0 sind üblich. Für die Kraftfahrzeugingenieure ist insbesondere von hohem Interesse, dass das Steifigkeitsverhältnis hoch ist, wobei eine möglichst niedrige kardanische Steifigkeit erhalten bleibt.

Um diese Kenngrößen konstruktiv zu optimieren, soll selbstverständlich der Kosten- und Gewichtsnutzungseffekt nicht außer Acht gelassen sein, sondern insbesondere optimiert werden.

Es ist Aufgabe der Erfindung, die Nachteile des Stands der Technik zu überwinden, insbesondere ein elastisches Gelenk insbesondere für eine Radaufhängung eines Kraftfahrzeugs vorzuschlagen, dessen Steifigkeitsverhältnis von axialer Streifigkeit zu radialer Steifigkeit bei möglichst niedriger kardanischer Steifigkeit unter Verwendung von kostengünstigen und leichten Werkstoffen niedrig ist.

Diese Aufgabe wird durch die Merkmale von Patentanspruch 1 ist gelöst.

Danach umfasst das elastische Gelenk eine Innenarmatur, eine die Innenarmatur umgebende Außenarmatur, wobei die Armaturen eine Axialrichtung und zwei zur Axialrichtung senkrechte, sowie zueinander senkrechte, in einer Umfangsrichtungsebene liegende Radialrichtungen festlegen, und einen Elastomerkörper zum gegenseitigen elastischen Abstützen der Armaturen. Erfindungsgemäß besteht der Elastomerkörper aus wenigstens vier sich jeweils von der Innenarmatur zur Außenarmatur erstreckenden Verbindungssäulen. Unter einer Verbindungssäule ist eine armförmige oder stabförmige Struktur zu verstehen, die eben nicht in Umfangsrichtung des elastischen Gelenks umläuft. Die jeweiligen Verbindungssäulen erstrecken sich in Radialrichtung, um eine entsprechende Steifigkeit in dieser Richtung zu etablieren.

Mit den erfindungsgemäßen Verbindungssäulen, die beliebig zueinander angeordnet sein können, wobei bevorzugte Positionen relativ zueinander in den folgend beschriebenen bevorzugten Ausführungen angegeben sind, wird eine Verringerung der Radialsteifigkeit erreicht, ohne zu starke Einbußen bei der Axialsteifigkeit hinnehmen zu müssen. Im Falle eines elastischen Gelenks mit ausschließlicher Elastomerfederung, also ohne hydraulische Dämpfungsmaßnahmen, sind es schließlich die Verbindungssäulen, welche die Armaturen miteinander für die elastische Schwingbarkeit verbinden. Bei einer Ausführung des elastischen Gelenks als sogenannte Hydrobuchse oder hydroelastisches Gelenk, dienen die Verbindungssäulen als verstärkte, Armaturen verbindende Begrenzungswände der hydraulischen Arbeitskammer, wobei die verbindungssäulenfreien Abschnitte durch Membranabschnitte realisiert sind, wodurch eine sehr gute hydraulische Abstimmbarkeit des hydrodynamischen Gelenks erreichbar ist.

Bei einer bevorzugten Ausführung der Erfindung sind die wenigstens vier Verbindungssäulen in einem Legungsschritt aus einem Stück Elastomermaterial gefertigt. Dabei verbleiben die Verbindungssäulen, vorzugsweise deren sich geradlinig erstreckende Säulenkörper, derart voneinander strukturell getrennt, dass die bloße Deformation einer Verbindungssäule, beispielsweise bei einer Radiallastbeaufschlagung, das Deformationsverhalten der anderen Verbindungssäulen insbesondere der benachbarten Verbindungssäulen unbeeinflusst lässt.

Auf diese Weise ist es möglich, die Radialsteifigkeit radialrichtungsabhängig einzustellen. Bei einer bevorzugten Ausführung der Erfindung sind die Säulenkörper der Verbindungssäulen im Wesentlichen identisch geformt.

Die Verbindungssäulen, insbesondere deren Säulenkörper, sind in deren Verlauf in Erstreckungsrichtung berührungsfrei angeordnet, damit eine Deformation der einen Verbindungssäule die benachbarte nicht beeinflusst. Bei einer Weiterbildung der Erfindung sind sich die wenigstens vier Verbindungssäulen als Paare achsensymmetrisch zur Axialrichtung angeordneter Verbindungssäulen zugeordnet. Ein Paar Verbindungssäulen ist gegenüber einem weiteren Paar Verbindungssäulen in Umfangsrichtung versetzt angeordnet. Dabei sind die Verbindungssäulen eines Paars in Radialrichtung betrachtet diametral gegenüberliegend positioniert. Vorzugsweise ist ein Versatzwinkel zwischen benachbarten Paaren im wesentlichen gleich groß, vorzugsweise etwa 90°. Die Verbindungssäulen können sich in etwa um 30° der Umfangsrichtung erstrecken, so dass in Axialrichtung betrachtet bei einem Versatzwinkel von 90° in Umfangsrichtung elastomerfreie, weiche Bereiche in der Umfangsbreite von 30° realisiert sind.

Bei einer derartigen Anordnung ist ein besonders großes Steifigkeitsverhältnis, nämlich von etwa 1,4, von axialer zu radialer Steifigkeit realisiert. Dabei ist eine niedrige Kardansteifigkeit bereitgestellt. Ein derartiges Radialsteifigkeitsverhältnis kann erzielt werden, ohne hochwertige Werkstoffe zu verwenden oder intensiven Herstellungsaufwand zu betreiben.

Bei einer bevorzugten Ausführung der Erfindung hat das elastische Gelenk eine Mittelradialebene, welche vorzugsweise das elastische Gelenk in zwei gleich dimensionierte Gelenkteile unterteilt. Ein Paar Verbindungssäulen ist auf einer Seite der mittleren Radialebene angeordnet, während ein weiteres Paar Verbindungssäulen auf der gegenüberliegenden Seite der mittleren Radialebene liegt.

Bei einer bevorzugten Ausführung der Erfindung definieren die Verbindungssäulen, insbesondere deren Säulenkörper, eine Erstreckungsrichtung, vorzugsweise eine Mittelachse, welche gegenüber den Radialrichtungen geneigt sein soll. Vorzugsweise ist ein Richtungsanteil der Erstreckungsrichtung in Radialrichtung größer als in Axialrichtung, vorzugsweise zwischen 50° und 70°.

Bei einer bevorzugten Ausführung der Erfindung sind die Neigungswinkel sämtlicher Erstreckungsrichtungen der Verbindungssäulen derart aufeinander abgestimmt, insbesondere gleich groß gewählt, dass eine Steifigkeit des elastischen Gelenks in Axialrichtung zunimmt, wenn der sich bei einer in Radialrichtung wirkenden Last elastisch verformende Elastomerkörper eine Relativbewegung zwischen der Innenarmatur und der Außenarmatur in Radialrichtung zulässt. Folglich wird bei einer Verformung des Elastomerkörpers in Radialrichtung eine Versteifung des Elastomerkörpers in Axialrichtung erreicht. Diese Eigenschaft der Axialsteifigkeitserhöhung bei elastischer Verformung in Radialrichtung wird insbesondere dadurch erreicht, dass die Verbindungssäulen gegenüber der Radialrichtung geneigt sind.

Bei einer bevorzugten Ausführung der Erfindung definieren die Verbindungssäulen jeweils eine gegenüber der Radialrichtung geneigte Erstreckungsrichtung, deren Richtungsanteil in Radialrichtung größer als in Axialrichtung ist. Dies bedeutet, dass die Verbindungssäulen einen kleineren Neigungswinkel zur Radialrichtung als zur Axialrichtung aufweisen. Die Geometrien, wie die Konturen der Säulenkörper der Verbindungssäulen und/oder die Neigungswinkel der Erstreckungsrichtungen der Verbindungssäulen, sind derart aufeinander abgestimmt, dass der sich bei einer in Radialrichtung wirkenden Last elastisch verformende Elastomerkörper eine Relativbewegung zwischen der Innen- und der Außenarmatur in Radialrichtung im Wesentlichen ohne eine Relativbewegung der Armaturen in Axialrichtung zulässt. Dies bedeutet, dass die Innenarmatur betreffend die Axialrichtung keine Bewegung relativ zur Außenarmatur und umgekehrt durchführt, sollte eine elastische Verformung des Elastomerkörpers in Radialrichtung einhergehen. Auf diese Weise ist eine Anschlagsfunktion des Elastomerkörpers in Axialrichtung realisiert.

Bei einer bevorzugten Ausführung der Erfindung sind jeweils zwei Verbindungssäulen, vorzugsweise unterschiedliche Paare Verbindungssäulen derart gegensinnig zur Radialrichtung geneigt, dass sich in Axialrichtung wirkende Verformungskräfte, die sich in den Säulenkörpern der Verbindungssäulen durch die Relativbewegung zwischen der Innenarmatur und der Außenarmatur in Radialrichtung aufbauen, entgegengesetzt gerichtet sind und sich gegenseitig vorzugsweise vollständig aufheben, so dass, wie gewünscht, eine Relativverlagerung der Armaturen in Axialrichtung verhindert ist, wodurch die gewünschte Anschlagsfunktion in Axialrichtung erreicht ist.

Vorzugsweise sind die Erstreckungsrichtungen sämtlicher Verbindungssäulen in einem spitzen Winkel von 25° bis 65° gegenüber der Radialrichtung geneigt. Besonders bevorzugt sind sämtliche Neigungswinkel der Verbindungssäulen gegenüber der Radialrichtung gleich ausgewählt.

Bei einer bevorzugten Ausführung der Erfindung definieren die Säulenkörper der Verbindungssäulen jeweils eine Mittelachse, die bei einer rotationsförmig gestalteten Verbindungssäule die Rotationsachse sein kann. Diese Mittelachse kann als die oben genannte Erstreckungsrichtung angesehen werden. Vorzugsweise treffen sich sämtliche Mittelachsen der Verbindungssäulen im Wesentlichen in einem gemeinsamen Bereich, sogar vorzugsweise an einer gemeinsamen Stelle im dreidimensionalen Raum. Dieser Bereich, vorzugsweise diese Stelle, liegt insbesondere auf der Axialrichtungsachse des elastischen Gelenks oder zumindest in deren Nähe. Bei einer Weiterbildung der Erfindung nimmt eine Querschnittsform des Säulenkörpers im Verlauf der Mittelachse von einem Mittelabschnitt hin zu beiden Armaturen insbesondere stetig zu. Die dabei betrachtete Querschnittsebene liegt senkrecht zur Mittelachse. Auf diese Weise sind verstärkte Kopplungsbereiche zu der jeweiligen Armatur erreichbar.

Eine besondere Maßnahme zur Reduzierung der radialen Steifigkeit, ohne entsprechende Verluste der Steifigkeit in Axialrichtung hinnehmen zu müssen, wird dadurch erreicht, dass zumindest eine in Axialrichtung zur Außenseite des Gelenks weisende Außenfläche des Säulenkörpers konkav geformt ist.

Im Hinblick auf die Armaturen sei klargestellt, dass diese nicht die am weitesten radial innen liegende Armatur bzw. die am weitesten außen liegende Armatur sein müssen, sondern auch durch Zwischenarmaturen, wie Zwischenringe, gebildet sein können.

Bei einer bevorzugten Ausführung der Erfindung sind die Verbindungssäulen an einem Zwischenring befestigt, der entweder über einen weiteren umlaufenden Elastomerkörper der Außen- oder der Innenarmatur mit dieser gekoppelt ist.

Die Innenarmatur sowie auch die Außenarmatur kann für jede Verbindungssäule sich radial diametral gegenüber liegende, insbesondere achsensymmetrische Abstützflächen bilden, deren Lotrechte parallel zur Erstreckungsrichtung der jeweiligen Verbindungssäule liegen.

Vorzugsweise hat die Außenarmatur eine insbesondere geschlossene Gehäuseringform, an deren Ringinnenseite jeweils ein Vorsprung zur Ausbildung einer Abstützfläche für die Verbindungssäule ausgebildet ist. Dabei kann die Ringstruktur und der Vorsprung aus einem Kunststoffstück gefertigt sein.

Bei einer Ausführung des elastischen Gelenks kann die Außenarmatur durch die Kombination einer Zwischenringbuchse geringerer Stärke und einer Außenringbuchse realisiert sein, welche durch einen Elastomerkörperabschnitt gekoppelt sind, der voll umfänglich ausgeführt ist.

Bei einer bevorzugten Ausführung der Erfindung ist die Innenarmatur durch eine stabförmige Grundstruktur gebildet, deren Mittelbereich zur Bildung von Abstützflächen für die Verbindungssäulen mit einer punktsymmetrischen radialen Vorwölbung geformt ist. Die Vorwölbung kann vorzugsweise zu einer Radialrichtung achsensymmetrisch sein, welche durch eine Radialmittelebene festgelegt sein kann. Die Abstützflächen sind vorzugsweise nur in einem Übergangsbereich zwischen einem Fuß der Vorwölbung und einem Vorwölbungsmaximum vorgesehen.

Bei einer bevorzugten Ausführung der Erfindung ist zum Reduzieren der kardanischen Steifigkeit und der Rotationssteifigkeit für die Innenarmatur ein Kugelgelenk in die innenliegende Buchse eingesetzt. Auf diese Weise kann die Lebensdauer und die Festigkeitseigenschaft deutlich erhöht werden.

Bei einer alternativen Ausführung des elastischen Gelenks als hydroelastisches Gelenk bilden die wenigstens vier Verbindungssäulen Tragfedersegmente, die gleichzeitig die Begrenzungswände der hydraulischen Arbeitskammer bilden, wobei die Bereiche ohne Verbindungssäule durch Membransegmente realisiert sind.

Weitere Vorteile, Eigenschaften und Merkmale der Erfindung werden durch die folgende Beschreibung bevorzugter Ausführungen der Erfindung anhand der beiliegenden Zeichnungen deutlich, in denen zeigen:
- Figur 1: eine Explosionsansicht einer ersten Ausführung der Erfindung;
- Figur 2: eine perspektivische Teilschnittansicht der Ausführung des elastischen Gelenks nach Figur 1;
- Figur 3: eine Seitenansicht in Axialrichtung des elastischen Gelenks nach den Figuren 1 und 2;
- Figur 4: eine Querschnittsansicht entlang der Schnittlinie A-A gemäß Figur 3;
- Figur 5: eine Schnittansicht entlang der Schnittlinie B-B gemäß Figur 4;
- Figur 6: eine Explosionsansicht einer zweiten Ausführung der Erfindung;
- Figur 7: eine perspektivische Teilschnittansicht des elastischen Gelenks nach Figur 6;
- Figur 8: eine Seitenansicht in Axialrichtung des elastischen Gelenks nach den Figuren 6 und 7;
- Figur 9: eine Schnittansicht entlang der Schnittlinie A-A gemäß Figur 8;
- Figur 10: eine Schnittansicht entlang der Schnittlinie B-B gemäß Figur 9;
- Figur 11: eine Explosionsansicht einer dritten Ausführung der Erfindung;
- Figur 12: eine perspektivische Teilschnittansicht des elastischen Gelenks nach Figur 11;
- Figur 13: eine Seitenansicht in Axialrichtung des elastischen Gelenks nach den Figuren 11 und 12;
- Figur 14: eine Schnittansicht entlang der Schnittlinie A-A gemäß Figur 13;
- Figur 15: eine Schnittansicht entlang der Schnittlinie B-B nach Figur 14;
- Figur 16: eine Explosionsansicht der vierten erfindungsgemäßen Ausführung;
- Figur 17: eine Seitenansicht in Axialrichtung des elastischen Gelenks gemäß Figur 16; und
- Figur 18: eine Schnittansicht entlang der Schnittlinie A-A gemäß Figur 17.

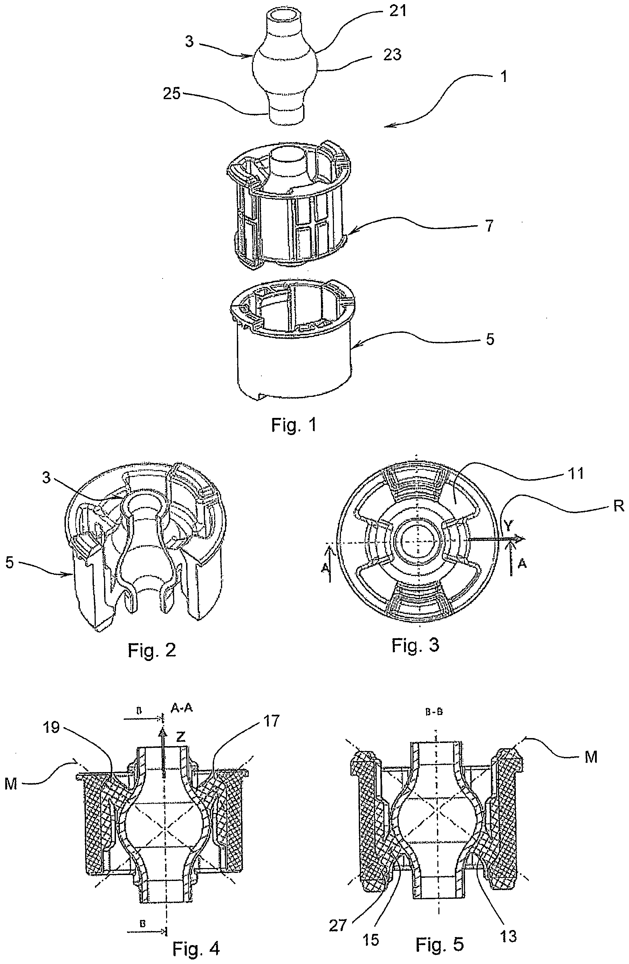

In der folgenden Figurenbeschreibung werden die wesentlichen Bestandteile des erfindungsgemäßen elastischen Gelenks zuerst anhand der Ausführung gemäß den Figuren 1 bis 5 erläutert. Bei der Beschreibung der weiteren Ausführungen wird, wenn nötig, auf entsprechende gleiche oder ähnliche Bestandteile Bezug genommen, ohne diese erneut für die jeweilige Ausführung zu erläutern.

In Figur 1 ist das erfindungsgemäße elastische Gelenk für eine Radaufhängung eines Kraftfahrzeugs im Allgemeinen mit der Bezugsziffer 1 versehen. Das elastische Gelenk, das eine reine Elastomerfederkomponente ohne hydraulische Zusatzfunktion aufweist, besteht im wesentlichen aus drei Bestandteilen, nämlich einer Innenarmatur 3, einer Außenarmatur 5 und einem zwischen den Armaturen 3, 5 angeordneten Elastomerfederkörper 7, der neben Elastomermaterial auch Versteifungskomponenten aus Metall oder Kunststoff aufweisen kann.

Wie aus den Figuren 1 bis 5 ersichtlich ist, hat der Elastomerkörper keine vollumfängliche Kopplungsstruktur zwischen den Armaturen 3, 5, sondern ist abschnittsweise durch Aussparung 11 realisiert, die sich vollständig in Axialrichtung durch das elastische Gelenk hindurch erstrecken kann. Durch diese Aussparung ist es möglich, dass ein Vulkanisationswerkzeug von beiden Seiten des elastischen Gelenks in das Innere des Elastomerkörpers eingreifen kann, wodurch die Herstellbarkeit des elastischen Gelenks vereinfacht ist.

Der Elastomerkörper 7 hat als Hauptbestandelemente vier Verbindungssäulen 13 bis 19, deren Säulenkörper strukturell voneinander getrennt sind, so dass sie sich ohne Beeinflussung der anderen Verbindungssäulen elastisch verformen können. Die Verbindungssäulen 13 bis 19 weisen eine Mittelachse M auf, die gegenüber der Radialrichtung R sowie gegenüber der Axialrichtung Z geneigt sind.

Die Verbindungssäulen 13 bis 19 erstrecken sich längs der Mittelachse M im Wesentlichen geradlinig von der Innenarmatur 3 zur Außenarmatur 5.

Die Innenarmatur 3 ist durch eine Hülse gebildet, die eine Rotationsform aufweist. Die Rotationsform ist durch eine im Mittelbereich ausgebildete Vorwölbung 21 realisiert, die zu einer radialen Mittelebene Y achsensymmetrisch ist. Von einem Wölbungsmaximum, das in Axialrichtung Z neigungsfrei ist, nimmt die Wölbung kontinuierlich zu Enden der Hülse ab, welche im Wesentlichen zylindrisch realisiert sind.

Im Wölbungsbereich zwischen dem Wölbungsmaximum 23 und dem zylindrischen Endabschnitt 25 sind gewölbte Abstützflächen für die jeweilige Verbindungssäule vorgesehen. Dabei ist die Neigung der Vorwölbung 21 derart realisiert, dass die Verbindungssäule, insbesondere deren Mittelachse lotrecht in die Innenarmatur 3 steht.

Auch die Außenarmatur ist durch eine punktsymmetrische rotationsförmige Hülsenform realisiert, welche an deren Enden im Bereich der Verbindungssäulen einen Vorsprung oder Absatz 27 aufweist, wobei die Abstützfläche im wesentlichen durch einen Übergangsabschnitt zwischen dem Absatz und dem Restabschnitt der Hülse realisiert ist. Auch die Mittelachse der Verbindungssäule steht senkrecht zu dem Übergangsabschnitt zum Absatz 27.

Wie in Figur 3 ersichtlich ist, erstrecken sich die jeweiligen Verbindungssäulen in Umfangsrichtung in einem Winkelbereich von etwa 30°. Zwei Paar Verbindungssäulen 13, 15 und 17, 19 sind vorgesehen, wobei die Verbindungssäulen 13, 15 und 17, 19 in Radialrichtung in diametral gegenüberliegenden Positionen liegen. Die Paare an sich sind um 90° zueinander versetzt, so dass in Axialrichtung betrachtet die Durchgangsräume 11 gebildet sind.

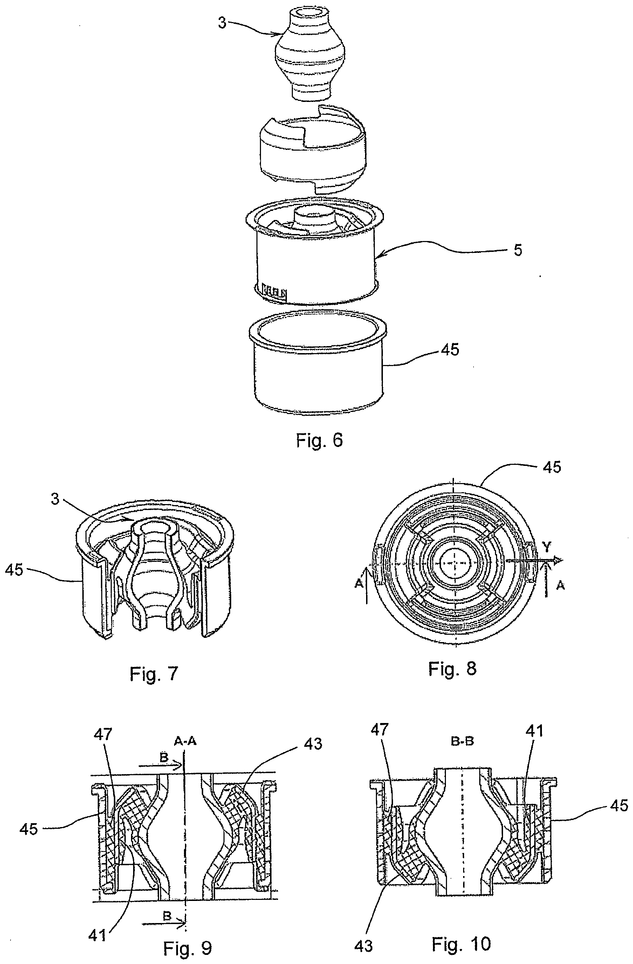

Die Ausführung gemäß den Figuren 6 bis 10 unterscheidet sich von dem elastischen Gelenk nach den Figuren 1 bis 5 im Aufbau der Außenarmatur. Diese Außenarmatur 5 hat zusätzlich einen Zwischenring 41, der an einem axialen Ende einen Neigungsabschnitt 43 aufweist, um die Abstützfläche für die jeweilige Verbindungssäule 13 bis 19 zu realisieren.

Etwa radial außen liegt eine umlaufende Außenhülse 45, die mit dem Zwischenring 41 über einen voll umlaufenden Ringkörper 47 elastisch gekoppelt ist.

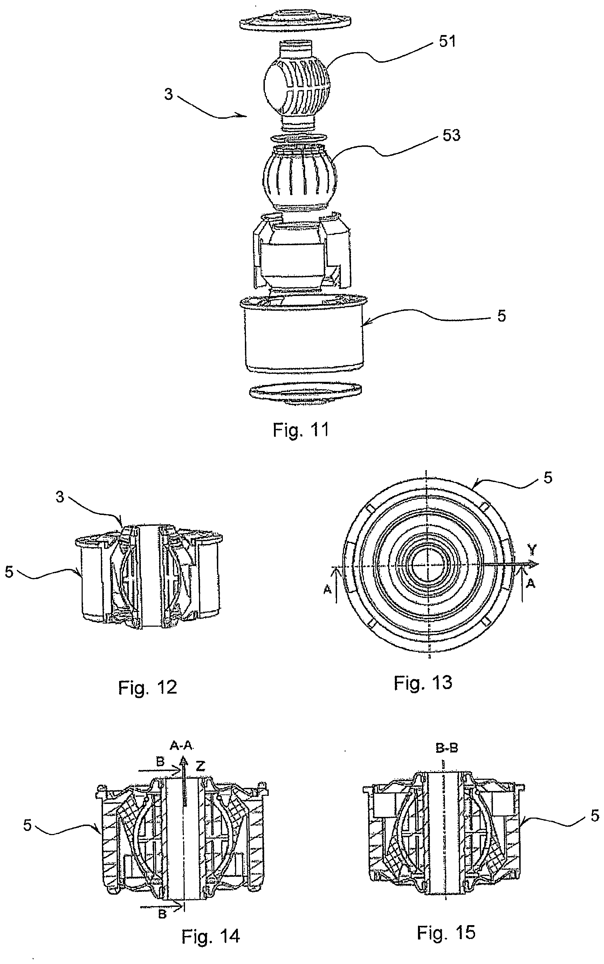

Die Ausführung gemäß den Figuren 11 bis 15 unterscheidet sich von der Grundausführung gemäß der Figur 1 bis 5 dadurch, dass die kardanische Steifigkeit und die Rotationssteifigkeit reduziert ist, wodurch die Lebensdauer und die Festigkeitseigenschaft des elastischen Gelenks verbessert ist. Hierzu hat das elastische Gelenk zusätzlich ein Kugelgelenk, das in der Innenarmatur realisiert ist. Hierzu wird ein Kugelkopf 51 in die geschlitzte Innenarmatur 53 eingesetzt.

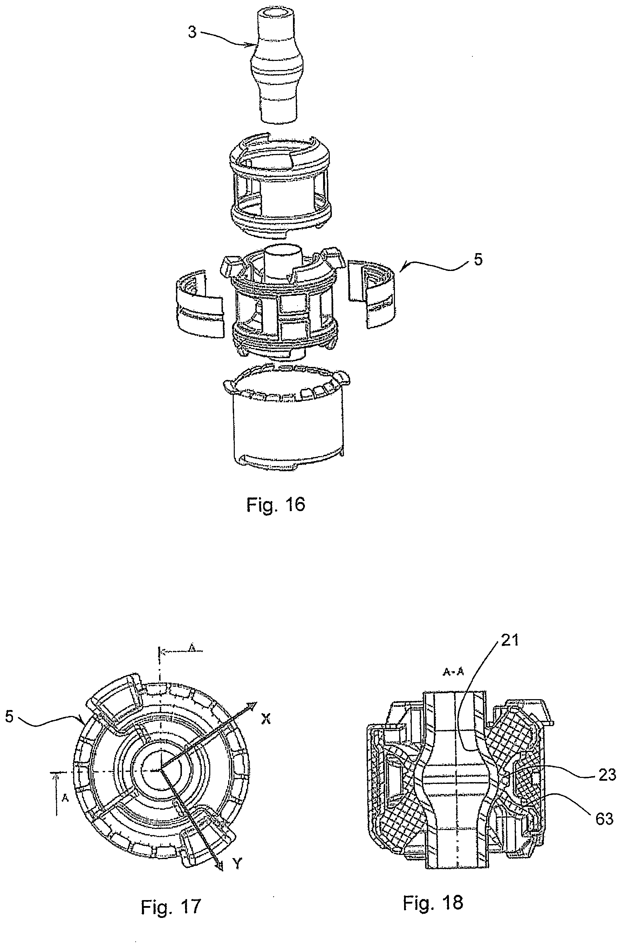

Die Ausführung gemäß den Figuren 16 bis 18 unterscheidet sich von der Grundausführung nach den Figuren 1 bis 5 dadurch, dass neben der rein elastomeren Federfunktion ein hydraulischer Dämpfungsmechanismus integriert ist, in dem eine hydraulische Arbeitskammer 61 eingebaut ist. Die hydraulische Arbeitskammer ist abschnittsweise durch die Verbindungssäulen 13 bis 19 begrenzt. Zusätzlich ist die hydraulische Arbeitskammer an den Abschnitten, an denen keine Verbindungssäule ausgebildet ist, durch eine Membranstruktur 63 begrenzt. Im Gegensatz zur Ausführung nach den Figuren 1 bis 5 ist nun an der Vorwölbung 21 der Innenarmatur ein Radialanschlag 23 aus Elastomermaterial realisiert.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: elastische Gelenk
- 3: Innenarmatur
- 5: Außenarmatur
- 7: Elastomerfederkörper
- 11: Aussparung
- 13, 15, 17, 19: Verbindungssäulen
- 21: Vorwölbung
- 23: Wölbungsmaximum
- 25: zylindrischer Endabschnitt
- 27: Absatz
- 41: Zwischenring
- 43: Neigungsabschnitt
- 45: Außenhülse
- 47: Ringkörper
- 53: Innenarmatur
- 61: hydraulische Arbeitskammer
- 63: Membranstruktur

- M: Mittelachse
- R: Radialrichtung
- Z: Axialrichtung
- Y: radiale Mittelebene

## Patentansprüche

1. Elastisches Gelenk (1) insbesondere für eine Radaufhängung eines Kraftfahrzeugs, umfassend: eine Innenarmatur (3), eine die Innenarmatur (3) umgebende Außenarmatur (5), wobei die Armaturen (3, 5) eine Axialrichtung (Z) und zwei zur Axialrichtung (Z) senkrechte sowie zueinander senkrechte, in einer Umfangsrichtungsebene liegende Radialrichtungen festlegen, und einen Elastomerkörper zum gegenseitigen elastischen Abstützen der Armaturen (3, 5), wobei der Elastomerkörper aus wenigstens vier sich jeweils von der Innenarmatur (3) zur Außenarmatur (5) erstreckenden Verbindungssäulen (13, 15, 17, 19) besteht, die sich in Radialrichtung erstrecken, um eine Steifigkeit in dieser Richtung zu etablieren, wobei die Verbindungssäulen (13, 15, 17, 19) in einem Stück Elastomermaterial gefertigt sind **dadurch gekennzeichnet, dass** die Verbindungssäulen (13, 15, 17, 19) derart voneinander strukturell getrennt sind, dass die bloße Deformation einer Verbindungssäule das Deformationsverhalten der anderen Verbindungssäulen unbeeinflusst lässt.

2. Gelenk nach Anspruch 1, **dadurch gekennzeichnet, dass** die Verbindungssäulen (13, 15, 17, 19) sich geradlinig erstreckende Säulenkörper aufweisen.

3. Gelenk nach Anspruch 1 oder 2, **dadurch gekennzeichnet, dass** die Verbindungssäulen (13, 15, 17, 19) im Verlauf deren Säulenkörper in Erstreckungsrichtung berührungsfrei angeordnet sind.

4. Gelenk nach einem der vorstehenden Ansprüche, **dadurch gekennzeichnet, dass** sich die wenigstens vier Verbindungssäulen (13, 15, 17, 19) als Paare achsensymmetrisch zur Axialrichtung (Z) angeordneter Verbindungssäulen zugeordnet sind, wobei ein Paar Verbindungssäulen gegenüber einem weiteren Paar Verbindungssäulen in Umfangsrichtung versetzt angeordnet ist, wobei vorzugsweise Versatzwinkel zwischen benachbarten Paaren im wesentlichen gleich groß, vorzugsweise etwa 90°, sind.

5. Gelenk nach einem der vorstehenden Ansprüche, **dadurch gekennzeichnet, dass** ein Paar Verbindungssäulen auf einer Seite einer Mittelradialebene (Y) des Gelenks (1) liegt und ein weiteres Paar Verbindungssäulen auf der gegenüberliegenden Seite der Mittelradialebene (Y) liegt.

6. Gelenk nach einem der vorstehenden Ansprüche, **dadurch gekennzeichnet, dass** die Verbindungssäulen (13, 15, 17, 19) jeweils eine gegenüber der Radialrichtung (R) geneigte Erstreckungsrichtung definieren, deren Richtungsanteil in Radialrichtung größer als in Axialrichtung (Z) ist, wobei Neigungswinkel der Erstreckungsrichtungen derart aufeinander abgestimmt, insbesondere gleich groß, sind, dass eine Steifigkeit des elastischen Gelenks (1) in Axialrichtung (Z) zunimmt, wenn der sich bei einer in Radialrichtung (R) wirkenden Last elastisch verformende Elastomerkörper eine Relativbewegung zwischen der Innenarmatur (3) und der Außenarmatur (5) in Radialrichtung (R) zulässt.

7. Gelenk nach einem der vorstehenden Ansprüche, **dadurch gekennzeichnet, dass** die Verbindungssäulen (13, 15, 17, 19) jeweils eine gegenüber der Radialrichtung (R) geneigte Erstreckungsrichtung definieren, deren Richtungsanteil in Radialrichtung (R) größer als in Axialrichtung (Z) ist, wobei die Geometrien, wie Konturen der Säulenkörper der Verbindungssäulen (13, 15, 17, 19) und/oder Neigungswinkel der Erstreckungsrichtungen, derart aufeinander abgestimmt sind, dass der sich bei einer in Radialrichtung (R) wirkenden Last elastisch verformende Elastomerkörper eine Relativbewegung zwischen der Innenarmatur (3) und der Außenarmatur (5) in Radialrichtung (R) im wesentlichen ohne eine Relativverlagerung der Armaturen in Axialrichtung (Z) zulässt.

8. Gelenk nach einem der vorstehenden Ansprüche, **dadurch gekennzeichnet, dass** jeweils zwei Verbindungssäulen derart gegensinnig zur Radialrichtung (R) geneigt sind, dass sich in Axialrichtung (Z) wirkende Verformungskräfte, die sich in den Säulenkörpern der Verbindungssäulen (13, 15, 17, 19) durch die Relativbewegung zwischen der Innenarmatur (3) und der Außenarmatur (5) in Radialrichtung (R) aufbauen, entgegengesetzt gerichtet sind und sich gegenseitig vorzugsweise vollständig aufheben, so dass eine Relativverlagerung der Armaturen in Axialrichtung (Z) verhindert ist.

9. Gelenk nach einem der vorstehenden Ansprüche, **dadurch gekennzeichnet, dass** die Erstreckungsrichtungen sämtlicher Verbindungssäulen (13, 15, 17, 19) in einem spitzen Winkel von zwischen 25° bis 65° gegenüber der Radialrichtung (R) geneigt sind.

10. Gelenk nach einem der vorstehenden Ansprüche, **dadurch gekennzeichnet, dass** die Säulenkörper der Verbindungssäulen (13, 15, 17, 19) jeweils eine Mittelachse (M) definieren, welche insbesondere die Erstreckungsrichtung definiert, wobei sämtliche Mittelachsen sich im wesentlichen in einem gemeinsamen Bereich treffen, der auf oder in der Nähe der Axialrichtungsachse liegt.

11. Gelenk nach einem der vorstehenden Ansprüche, **dadurch gekennzeichnet, dass** eine Querschnittsform des Säulenkörpers im Verlauf der Mittelachse (M) von einem Mittelabschnitt hin zu den Armaturen zunimmt.

12. Gelenk nach einem der vorstehenden Ansprüche, **dadurch gekennzeichnet, dass** der Säulenkörper eine in Axialrichtung (Z) zur Außenseite des Gelenks (1) weisende Außenfläche aufweist, die von der Außenseite betrachtet konkav geformt ist.

13. Gelenk nach einem der vorstehenden Ansprüche, **dadurch gekennzeichnet, dass** für jede Verbindungssäule die Armaturen sich radial diametral gegenüberliegende, insbesondere achsensymmetrische Abstützflächen bilden, deren Lotrechten parallel zur Erstreckungsrichtung der jeweiligen Verbindungssäule liegen.

14. Gelenk nach einem der vorstehenden Ansprüche, **dadurch gekennzeichnet, dass** die Außenarmatur (5) einen insbesondere geschlossenen Gehäusering aufweist, an dessen Ringinnenseite jeweils ein Vorsprung (27) zur Ausbildung einer Abstützfläche für die Verbindungssäule ausgebildet ist, wobei vorzugsweise die Ringstruktur und der Vorsprung (27) aus einem Kunststoffstück gespritzt sind.

15. Gelenk nach einem der vorstehenden Ansprüche, **dadurch gekennzeichnet, dass** die Innenarmatur (3) eine stabförmige Grundstruktur bildet, deren Mittelbereich zur Bildung von Abstützflächen für die Verbindungssäulen (13, 15, 17, 19) mit einer punktsymmetrischen radialen Vorwölbung (21) geformt ist, die vorzugsweise zur Radialrichtung (R) achsensymmetrisch ist, wobei insbesondere die Abstützflächen nur in einem Übergangsbereich zwischen einem Fuß der Vorwölbung (21) und einem Wölbungsmaximum (23) ausgebildet sind, und/oder dass an der Innenseite der Außenarmatur (5) und/oder an der Außenseite der Innenarmatur (3) insbesondere an der Vorwölbung (21) der Innenarmatur (3) ein Elastomeranschlag realisiert ist, der sich vorzugsweise in Umfangsrichtung vollständig ringförmig erstreckt.

## Claims

1. Elastic joint (1), in particular for a wheel suspension of a motor vehicle, comprising: an inner armature (3), an outer armature (5) surrounding the inner armature (3), wherein the armatures (3, 5) define an axial direction (Z) and two radial directions perpendicular to the axial direction (Z) as well as perpendicular to each other and disposed in a circumferential plane, and an elastomeric body for the mutual elastic support of the armatures (3, 5), wherein the elastomeric body consists of at least four connecting columns (13, 15, 17, 19) respectively extending from the inner armature (3) to the outer armature (5) extending in radial direction in order to establish a stiffness in this direction, wherein the connecting columns (13, 15, 17, 19) are made from one piece of elastomeric material, **characterised in that** the connecting columns (13, 15, 17, 19) are structurally separated from each other such that the mere deformation of a connecting column does not affect the deformation behaviour of the other connecting columns.

2. Joint according to claim 1 **characterised in that** the connecting columns (13, 15, 17, 19) having column bodies extending rectilinearly.

3. Joint according to claim 1 or 2 **characterised in that** the connecting columns (13, 15, 17, 19) are arranged without contact along their column bodies in extending direction.

4. Joint according to one of the preceding claims **characterised in that** the at least four connecting columns (13, 15, 17, 19) are allocated to each other as pairs of connecting columns arranged axially symmetrically with respect to the axial direction (Z), wherein one pair of connecting columns is arranged circumferentially offset with respect to another pair of connecting columns, wherein preferably offset angles between neighbouring pairs are essentially equal, preferably about 90°.

5. Joint according to one of the preceding claims **characterised in that** one pair of connecting columns is disposed on one side of a central radial plane (Y) of the joint (1) and another pair of connecting columns is disposed on the opposite side of the central radial plane (Y).

6. Joint according to one of the preceding claims **characterised in that** the connecting columns (13, 15, 17, 19) respectively define an extension direction that is inclined with respect to the radial direction (R) and the directional component in radial direction of which is larger than in axial direction (Z), wherein angles of inclination of the extension directions are adjusted to each other, in particular of equal size, such that a stiffness of the elastic joint (1) in axial direction (Z) increases when the elastomeric body, which elastically deforms under a load acting in radial direction (R), enables a relative movement between the inner armature (3) and the outer armature (5) in radial direction (R).

7. Joint according to one of the preceding claims **characterised in that** the connecting columns (13, 15, 17, 19) respectively define an extension direction that is inclined with respect to the radial direction (R) and the directional component in radial direction (R) of which is larger than in axial direction (Z), wherein the geometries, like contours of the column bodies of the connecting columns (13, 15, 17, 19) and/or angles of inclination of the extension directions are adjusted to each other such that the elastomeric body, which elastically deforms under a load acting in radial direction (R), enables a relative movement between the inner armature (3) and the outer armature (5) in radial direction (R), essentially without a relative displacement of the armatures in axial direction (Z).

8. Joint according to one of the preceding claims **characterised in that** two respective connecting columns are inclined in opposite direction to the radial direction (R) such that deformation forces acting in axial direction (Z), which build up inside the column bodies of the connecting columns (13, 15, 17, 19) owing to the relative movement in radial direction (R) between the inner armature (3) and the outer armature (5), have opposite directions and preferably cancel each other out completely, so that a relative displacement of the armature in axial direction (Z) is prevented.

9. Joint according to one of the preceding claims **characterised in that** the extension directions of all connecting columns (13, 15, 17, 19) are inclined with respect to the radial direction (R) in an acute angle of between 25° to 65°.

10. Joint according to one of the preceding claims **characterised in that** the column bodies of the connecting columns (13, 15, 17, 19) respectively define a centre axis (M) which in particular defines the extension direction, wherein all centre axes meet each other essentially in a common area located on or near the axis of the axial direction.

11. Joint according to one of the preceding claims **characterised in that** a cross-section shape of the column body increases along the centre axis (M) from a centre section towards the armatures.

12. Joint according to one of the preceding claims **characterised in that** the column body presents an outer surface facing in axial direction (Z) towards the outside of the joint (1) and having a concave shape seen from the outside.

13. Joint according to one of the preceding claims **characterised in that** for each connecting column the armatures form support surfaces diametrically opposed to each other and in particular axially symmetrical, the perpendiculars of which are disposed parallel to the extension direction of the respective connecting column.

14. Joint according to one of the preceding claims **characterised in that** the outer armature (5) presents an in particular closed housing ring, at the inside of which ring a protrusion (27) is formed respectively for the formation of a support surface for the connecting column, wherein preferably the ring structure and the protrusion (27) are moulded out of one plastic piece.

15. Joint according to one of the preceding claims **characterised in that** the inner armature (3) forms a rod-like basic structure, the central area of which is formed with a point-symmetrical radial bulge (21) for the formation of support surfaces for the connecting columns (13, 15, 17, 19), which is preferably axially symmetrical with respect to the radial direction (R), wherein in particular the support surfaces are only formed in a transition area between a base of the bulge (21) and a bulge maximum (23), and/or **in that** at the inside of the outer armature (5) and/or at the outside of the inner armature (3), in particular at the bulge (21) of the inner armature (3), an elastomeric abutment is realised that extends completely circularly, preferably in circumferential direction.

## Revendications

1. Articulation élastique (1), en particulier pour une suspension de roues d'un véhicule automobile, comprenant : une armature intérieure (3), une armature extérieure (5) entourant l'armature intérieure (3), les armatures (3, 5) définissant un sens axial (Z) et deux sens radiaux perpendiculaires au sens axial (Z) et perpendiculaire l'un à l'autre se situant dans un plan de sens circonférentiel, et un corps en élastomère pour l'appui élastique réciproque des armatures (3, 5), le corps en élastomère étant composé d'au moins quatre colonnes de liaison (13, 15, 17, 19) s'étendant respectivement de l'armature intérieure (3) vers l'armature extérieure (5) et qui s'étendent dans le sens radial afin d'établir une rigidité dans ce sens, les colonnes de liaison (13, 15, 17, 19) étant fabriquées dans un morceau de matériau élastomérique, **caractérisée en ce que** les colonnes de liaison (13, 15, 17, 19) sont séparés structurellement les unes des autres de manière à ce que la simple déformation d'une colonne de liaison n'ait aucune influence sur le comportement de déformation des autres colonnes de liaison.

2. Articulation selon la revendication 1, **caractérisée en ce que** les colonnes de liaison (13, 15, 17, 19) présentent des corps de colonnes s'étendant en ligne droite.

3. Articulation selon la revendication 1 ou 2, **caractérisée en ce que** les colonnes de liaison (13, 15, 17, 19) sont disposées dans l'orientation de leurs corps de colonnes dans le sens d'extension sans contact.

4. Articulation selon une des revendications précédentes, **caractérisée en ce que** les quatre colonnes de liaison (13, 15, 17, 19) sous forme de paires sont associées à des colonnes de liaison disposée de manière symétrique à l'axe par rapport au sens axial (Z), une paire de colonnes de liaison étant disposée décale par rapport à une autre paire de colonnes de liaison dans le sens circonférentiel, les angles de décalage entre des paires voisines étant de préférence sensiblement identiques, de préférence d'environ 90°.

5. Articulation selon une des revendications précédentes, **caractérisée en ce qu'**une paire de colonnes de liaison se situe sur une face d'un plan radial médian (Y) de l'articulation (1) et qu'une autre paire de colonnes de liaison se situe sur la face opposée du plan radial médian (Y).

6. Articulation selon une des revendications précédentes, **caractérisée en ce que** les colonnes de liaison (13, 15, 17, 19) définissent respectivement un sens d'extension incliné par rapport au sens radial (R) et dont la part directionnelle est plus importante dans le sens radial que dans le sens axial (Z), les angles d'inclinaison des sens d'extension étant adaptés les uns aux autres, en particulier identiques, de manière à ce qu'une rigidité de l'articulation élastique (1) augmente dans le sens axial (Z) lorsque le corps en élastomère se déformant élastiquement dans le cas d'une force agissant dans le sens radial (R) permette un mouvement relatif entre l'armature intérieure (3) et l'armature extérieure (5) dans le sens radial (R).

7. Articulation selon une des revendications précédentes, **caractérisée en ce que** les colonnes de liaison (13, 15, 17, 19) définissent respectivement un sens d'extension incliné par rapport au sens radial (R) et dont la part directionnelle est plus importante dans le sens radial (R) que dans le sens axial (Z), les géométries, comme les contours et corps de colonnes des colonnes de liaison (13, 15, 17, 19) et/ou les angles d'inclinaison des sens d'extension étant adaptés les uns aux autres de manière à ce que le corps en élastomère se déformant élastiquement dans le cas d'une force agissant dans le sens radial (R) permette un mouvement relatif entre l'armature intérieure (3) et l'armature extérieure (5) dans le sens radial (R) sensiblement sans déplacement relatif des armatures dans le sens axial (Z).

8. Articulation selon une des revendications précédentes, **caractérisée en ce que** respectivement deux colonnes de liaison sont inclinées en sens inverse du sens radial (R) de manière à ce que des forces de déformation agissant dans le sens axial (Z) et qui se créent dans les corps de colonnes des colonnes de liaison (13, 15, 17, 19) en raison du mouvement relatif entre l'armature intérieure (3) et l'armature extérieure (5) dans le sens radial (R) soient dirigée en sens inverse et se suspendent réciproquement de préférence entièrement, de sorte qu'un déplacement relatif des armatures dans le sens axial (Z) est empêché.

9. Articulation selon une des revendications précédentes, **caractérisée en ce que** les sens d'extension de toutes les colonnes de liaison (13, 15, 17, 19) sont inclinés suivant un angle aigu compris entre 25° et 65° par rapport au sens radial (R).

10. Articulation selon une des revendications précédentes, **caractérisée en ce que** les corps de colonnes des colonnes de liaison (13, 15, 17, 19) définissent respectivement un axe médian (M) qui définit en particulier le sens d'extension, tous les axes médians se rencontrant sensiblement dans une zone commune qui se trouve sur ou à proximité de l'axe du sens axial.

11. Articulation selon une des revendications précédentes, **caractérisée en ce qu'**une forme de section transversale du corps de colonne augmente dans l'orientation de l'axe médian (M) depuis une section médiane jusqu'aux armatures.

12. Articulation selon une des revendications précédentes, **caractérisée en ce que** le corps de colonnes présente une surface extérieure tournée dans le sens axial (Z) vers la face extérieure de l'articulation (1) et qui a une forme concave vue depuis la face extérieure.

13. Articulation selon une des revendications précédentes, **caractérisée en ce que**, pour chaque colonne de liaison, les armatures forment des surfaces d'appui opposées radialement et diamétralement, en particulier symétriques à l'axe, dont les perpendiculaires sont situées parallèlement au sens d'extension de la colonne de liaison respective.

14. Articulation selon une des revendications précédentes, **caractérisée en ce que** l'armature extérieure (5) présente un anneau de boîtier en particulier fermé sur la face intérieure duquel une saillie (27) destinée à constituer une surface d'appui pour les colonnes de liaison est formée, la structure annulaire et la saillie (27) étant de préférence injectées à partir d'un morceau de matière plastique.

15. Articulation selon une des revendications précédentes, **caractérisée en ce que** l'armature intérieure (3) forme une structure de base en forme de tige dont la zone médiane, pour former des surfaces d'appui pour les colonnes de liaison (13, 15, 17, 19), est conformée avec un pré-bombement radial à symétrie ponctuelle (21) qui est de préférence symétrique à l'axe par rapport au sens radial (R), les surfaces d'appui étant en particulier réalisées seulement dans une zone de transition entre un pied du pré-bombement (21) et un maximum de bombement (23), et/que, au niveau de la face intérieure de l'armature extérieure (5) au niveau de la face intérieure de l'armature extérieure (3), et/ou au niveau de la face extérieure de l'armature intérieure (3), en particulier au niveau du pré-bombement (21) de l'armature intérieure (3), est réalisée une butée en élastomère qui s'étend de préférence entièrement en forme annulaire dans le sens circonférentiel.
